# EUROPÄISCHE PATENTSCHRIFT

(11) **EP 2 501 912 B1**
(45) Veröffentlichungstag und Bekanntmachung des Hinweises auf die Patenterteilung: **14.10.2015**
(21) Anmeldenummer: 10784489.6
(22) Anmeldetag: 19.11.2010
(51) Int. Cl.: F02B 29/04, F28D 7/16, F28F 9/00

(54) **SAUGROHR FÜR EINEN VERBRENNUNGSMOTOR**
INTAKE PIPE FOR AN INTERNAL COMBUSTION ENGINE
TUYAU D'ASPIRATION POUR UN MOTEUR À COMBUSTION INTERNE

(30) Priorität: 20.11.2009 DE 102009053884
(43) Veröffentlichungstag der Anmeldung: 26.09.2012
(73) Patentinhaber: MAHLE Behr GmbH & Co. KG, 70469 Stuttgart (DE)
(72) Erfinder: SAUMWEBER, Christian, 70378 Stuttgart (DE); BRAIC, Viorel, 70190 Stuttgart (DE); SCHIENEMANN, Mark, 70469 Stuttgart (DE)
(74) Vertreter: Grauel, Andreas
(86) Internationale Anmeldenummer: PCT/EP2010/067864
(87) Internationale Veröffentlichungsnummer: WO 2011/061311

(56) Entgegenhaltungen:
- EP-A1- 1 707 911
- EP-A2- 0 149 466
- EP-A2- 1 010 889
- DE-A1-102006 043 526
- DE-A1-102007 030 464
- DE-B3-102004 025 187
- FR-A1- 2 908 833
- FR-A1- 2 921 123

## Beschreibung

Die Erfindung betrifft ein Saugrohr für einen Verbrennungsmotor nach dem Oberbegriff des Anspruchs 1.

Aus der Praxis des Fahrzeugbaus ist es bekannt, Ladeluftkühler zur Kühlung eines verdichteten und dem Verbrennungsmotor zugeführten Gases indirekte auszuführen, das heißt als von einem Kühlfluid wie etwa Kühlmittel des Verbrennungsmotors durchströmter Wärmetauscher. Es ist bekannt, einen solchen Wärmetauscher in einem Saugrohr des Verbrennungsmotors integriert anzuordnen. Bei einer solchen Bauform kann der Wärmetauscher einen Stapel von mit Kühlmittel durchströmten Flachrohren aufweisen, wobei er durch eine Öffnung in ein Saugrohrgehäuse eingesetzt und mittels einer Flanschplatte an dem Gehäuse befestigt ist. Die Ladeluft umströmt dann die kühlmitteldurchströmten Flachrohre und wird so gekühlt. Die Druckschrift FR2908833 A1 offenbart ein solches Saugrohr.

Es ist die Aufgabe der Erfindung, ein Saugrohr für einen Verbrennungsmotor anzugeben, mit dem ein Ladeluftkühler mit besonders guter mechanischer Stabilität integriert ausgebildet ist.

Diese Aufgabe wird für ein eingangs genanntes Saugrohr erfindungsgemäß mit den kennzeichnenden Merkmalen des Anspruchs 1 gelöst. Indem das äußere Gehäuse des Saugrohrs zumindest teilweise als die Tauscherrohre umgebender Wassermantel ausgebildet ist und die Tauscherrohre von der Ladeluft durchströmt und nicht wie im Stand der Technik umströmt werden, ergeben sich besonders einfache und effektive Möglichkeiten einer mechanisch stabilen, druckfesten und vibrationsresistenten Auslegung des Wärmetauschers im Saugrohr. Zugleich kann eine solche Anordnung einfach, prozesssicher und kostengünstig hergestellt werden.

Unter Ladeluft im Sinne der Erfindung ist allgemein nicht nur komprimierte Luft, sondern auch ein Gemisch aus Luft und rückgeführtem Abgas zu verstehen.

Grundsätzlich kann eine erfindungsgemäße Vorrichtung mit jeder bekannten Art der Abgasrückführung, insbesondere Niederdruck-Abgasrückführung und Hochdruck-Abgasrückführung, kombiniert werden. Die Einspeisung des rückgeführten Abgases kann je nach Anforderung stromaufwärts, stromabwärts oder unmittelbar im Bereich des Wärmetauschers erfolgen.

Bei einer bevorzugten Ausführungsform der Erfindung münden die Tauscherrohre endseitig jeweils in Böden des Wärmetauschers, wodurch eine sichere und fluiddichte Festlegung ermöglicht ist.

Allgemein bevorzugt ist es vorgesehen, dass der Wassermantel abschnittsweise flächig mit den Tauscherrohren verlötet ist. Durch diese unmittelbare stoffschlüssige Verbindung des Wassermantels bzw. Gehäuseteils des Saugrohrs mit den luftdurchströmten und fluidumströmten Tauscherrohren wird eine mechanisch äußerst stabile und zugleich kostengünstig herzustellende Bauform des Wärmetauschers bereitgestellt. Die flächige Verlötung kann insbesondere mit abgeflachten Schmalseiten der als Flachrohre ausgebildeten Tauscherrohre erfolgen. In bevorzugter, aber nicht notwendiger Detailgestaltung ist dabei ein kühlfluidseitiger Sammler als sich über mehrere der Tauscherrohre erstreckende Ausbuchtung des Wassermantels ausgebildet, wobei bevorzugt ein Kühlfluid-Anschluss an der Ausbuchtung vorgesehen ist. Hierdurch werden zusätzliche Bauteile für einen Kühlfluidsammler eingespart, wobei die Ausbuchtung durch einfache Deformation eines Metallblechs hergestellt werden kann.

Bei einer allgemein vorteilhaften Ausführungsform umfasst der Wassermantel zumindest zwei Blechformteile. In bevorzugter Detailgestaltung kann dabei zumindest eines der Blechformteile eine entlang einer Stapelrichtung der Tauscherrohre verlaufende Basis und zwei dazu senkrecht verlaufende Schenkel aufweisen, wobei die Schenkel jeweils mit einer Breitseite eines äußeren Tauscherrohrs verlötet sind. Hierdurch wird eine besonders einfache und mechanisch stabile Konstruktion bereitgestellt.

Allgemein vorteilhaft ist der Wärmetauscher des erfindungsgemäßen Saugrohrs als gemeinsam in einem Lötofen verlötete Einheit aus Tauscherrohren, Wassermantel und Böden hergestellt. Hierzu wird auf die bevorzugten Ausführungsbeispiele der Erfindung verwiesen. Es kann je nach Anforderungen auch eine mehrreihige Anordnung von Tauscherrohren in einer Tiefenrichtung vorgesehen sein und die Teile des Wassermantels können zumindest teilweise L-förmig ausgeformt sein.

Allgemein bevorzugt ist ein Wassermantel des Wärmetauschers des erfindungsgemäßen Saugrohrs aus zwei, drei oder vier einzelnen Komponenten aufgebaut.

Bei einer möglichen Ausführungsform der Erfindung ist zumindest eines, Eintrittsabschnitt oder Motorflansch, mittels formschlüssiger mechanischer Festlegung, bevorzugt mittels Wellschlitz-Bördelung und/oder Verschraubung, an dem Wärmetauscher festgelegt. Diese mechanische Festlegung ermöglicht insbesondere die Ausbildung der jeweiligen Komponente aus Kunststoff. Es sind auch Varianten möglich, bei denen ein aus Metall ausgebildeter Eintrittsabschnitt oder Motorflansch mittels mechanischer Festlegung wie zum Beispiel Wellschlitz-Bördelung oder Verschraubung befestigt ist.

Bei einer ergänzenden oder alternativen Ausführungsform ist zumindest eines, Eintrittsabschnitt oder Motorflansch, stoffschlüssig mit dem Wärmetauscher verbunden, bevorzugt mittels Verschweißung und/oder Verlötung. Im Fall von Verschweißung oder Verlötung kann die betreffende Komponente aus Metall bestehen, zum Beispiel als Blechformteil oder als Gussteil. Eine solche Ausführung kann vorsehen, dass der metallische Eintrittsabschnitt und/oder Motorflansch gemeinsam mit dem Wärmetauscher kassettiert und in einem Lötofen verlötet wird. Alternativ kann aber auch eine Verlötung oder Verweißung nach einer Herstellung des Wärmetauschers im Lötofen erfolgen.

Ganz allgemein kann je nach Anforderungen vorgesehen sein, dass zumindest eines von beiden, Eintrittsabschnitt oder Motorflansch, aus Kunststoff besteht oder auch aus Metall, zum Beispiel Aluminium. Insbesondere ist eine Mischform möglich, bei der zum Beispiel der Eintrittsabschnitt aus Kunststoff besteht und der Motorflansch aus Metall oder umgekehrt. Dies kann insbesondere davon abhängig sein, ob an einer der Komponenten eine Möglichkeit zur Einleitung von rückgeführtem Abgas vorgesehen ist, wobei eine Ausführung aus Metall auf einfache Weise weitere Maßnahmen zur Veränderung einer lokalen Überhitzung erübrigen kann.

Bei einer bevorzugten Ausgestaltung der Erfindung beträgt das Verhältnis zwischen einer quer zu einer Luftströmungsrichtung bzw. Breitenrichtung gemessenen Breite des Wärmetauschers und einem Zylinderabstand des Verbrennungsmotors zwischen 2,1 und 3,3. Besonders bevorzugt gilt dies in Kombination mit einem Vierzylinder-Reihenmotor. Alternativ oder ergänzend ist es vorgesehen, dass das Verhältnis zwischen einer quer zu einer Luftströmungsrichtung bzw. Tiefenrichtung gemessenen Tiefe des Wärmetauschers und einem Zylinderbohrungsdurchmesser des Verbrennungsmotors zwischen 0,95 und 1,4 beträgt. Weiterhin alternativ oder ergänzend beträgt das Verhältnis zwischen einer in Luftströmungsrichtung bzw. Höhenrichtung gemessenen Höhe des Wärmetauschers und dem Produkt aus Verdichtungsverhältnis und Kolbenhub des Verbrennungsmotors bevorzugt zwischen 0,065 und 0,095. Bei jedem der vorstehend vorgeschlagenen bevorzugten Bereiche der Relation zwischen Abmessungen des Motors und Abmessungen des Wärmetauschers handelt es sich um eine thermodynamisch optimierte Variante. Besonders bevorzugt liegen dabei mehrere oder sämtliche der Varianten in Kombination vor.

Bei einer weiteren vorteilhaften Ausgestaltung der Erfindung umströmt das Kühlfluid die Rohre überwiegend in Gegenstromrichtung bezüglich der Ladeluft, wodurch eine thermodynamisch besonders effektive und gleichmäßige Kühlung erreicht wird.

Bei einer optimierten Ausführungsform haben die als Flachrohre ausgebildeten Tauscherrohre einen Durchmesser D von etwa 6 mm bis etwa 10 mm, wobei besonders bevorzugt eine Querteilung Q zwischen 8 mm und 12 mm beträgt. Unter dem Begriff Querteilung ist dabei die Wiederhollänge aus einem Flachrohr und einem nachfolgenden Spalt oder einer Rippe zu verstehen. Insgesamt kann hierdurch eine gute Kühlung bei besonders geringem Druckabfall erzielt werden.

Bei einer möglichen Ausführungsform der Erfindung ist an dem Motorflansch ein Anschlussglied für eine Abgasrückführung ausgebildet. Dabei kann es sich zum Beispiel um eine Hochdruck-Abgasrückführung handeln, wobei der Motorflansch bevorzugt als Aluminium-Gussteil ausgebildet ist.

Allgemein bevorzugt ist zur Optimierung des Bauraums und zur Minimierung des Druckabfalls vorgesehen, dass ein Neigungswinkel zwischen der Längsachse der Flachrohre und einer Anschlussebene des Zylinderkopfs des Verbrennungsmotors zwischen 70° und 90° für beide Hauptachsen des Flachrohrquerschnitts beträgt.

Thermodynamisch vorteilhafte Geometrien für einen erfindungsgemäßen Wärmetauscher zeichnen sich durch folgende Wertebereiche aus:

| | |
|---|---|
| Höhe h des Wärmetauschers: | 60 mm bis 200 mm; |
| Breite b des Wärmetauschers: | 40 mm bis 300 mm; |
| Tiefe t des Wärmetauschers: | 30 mm bis 170 mm. |

Weitere Vorteile und Merkmale einer erfindungsgemäßen Ausführungsform ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine räumliche Gesamtansicht eines erfindungsgemäßen Saugrohrs.
- Fig. 2: zeigt eine räumliche Ansicht eines Wärmetauschers des Saugrohrs aus Fig. 1.
- Fig. 3: zeigt eine explodierte Darstellung des Wärmetauschers aus Fig. 2.
- Fig. 4: zeigt eine schematische Schnittansicht eines Stapels von Tauscherrohren des Wärmetauschers aus Fig. 2.
- Fig. 5: zeigt eine räumliche Ansicht eines weiteren Ausführungsbeispiels eines Wärmetauschers des Saugrohrs.

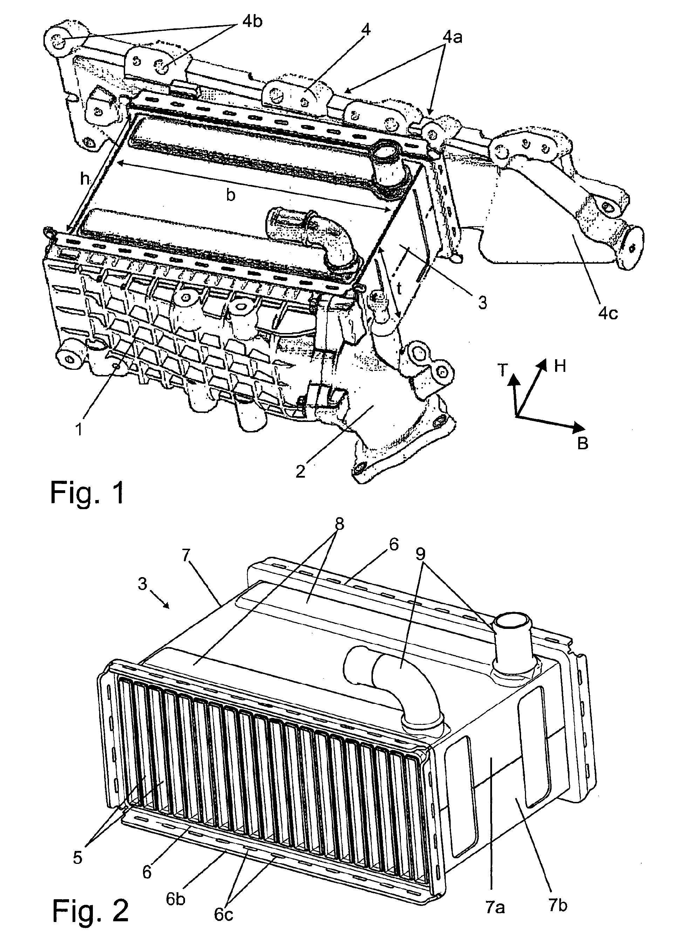

Das in Fig. 1 gezeigte Saugrohr umfasst einen Eintrittsabschnitt 1, der als Kunststoff-Spritzgussteil ausgebildet ist. Der Eintrittsabschnitt 1 verjüngt sich im Querschnitt in einer Breitenrichtung B des Saugrohrs. An einem seitlichen Ende mit maximalem Querschnitt ist eine Zuleitung 2 zur Zuführung von Ladeluft angeflanscht. Der Eintrittsabschnitt 1 erfüllt im Wesentlichen die Funktion eines eintrittsseitigen Sammlers eines an den Eintrittsabschnitt 1 angrenzenden Wärmetauschers 3. Der Wärmetauscher 3 wird in einer Hochrichtung H von der Ladeluft durchströmt, wobei Wärme der Ladeluft an ein Kühlfluid in Form eines flüssigen Kühlmittels abgegeben wird.

Die in Fig. 1 definierten Bezeichnungen der Hochrichtung H, Breitenrichtung B und Tiefenrichtung T sind als im Wärmetauscherbau übliche Terminologie bezüglich der Orientierung der Tauscherrohre 5 übernommen. Eine Orientierung der Einbaulage des Wärmetauschers 3 gegenüber der Schwerkraft ist mit diesen Bezeichnungen nicht korreliert.

Austrittsseitig des in der Hochrichtung H von der Ladeluft durchströmten Wärmetauschers 3 ist ein Motorflansch 4 angeordnet, an einen (nicht dargestellten) Zylinderkopf eines Verbrennungsmotors unmittelbar angeflanscht ist. Vorliegend erfolgt die Festlegung mittels Dichtflächen 4a und Befestigungsbohrungen 4b. Der Durchtrittsquerschnitt des Motorflanschs erweitert sich in Strömungsrichtung der Ladeluft vom Austritt des Wärmetauschers bis zur Anschlussebene des Zylinderkopfs.

Der Motorflansch 4 ist vorliegend als Aluminium-Druckgussteil ausgeformt. Er umfasst an einem seitlichen Bereich ein Anschlussglied 4c für eine Hochdruck-Abgasrückführung.

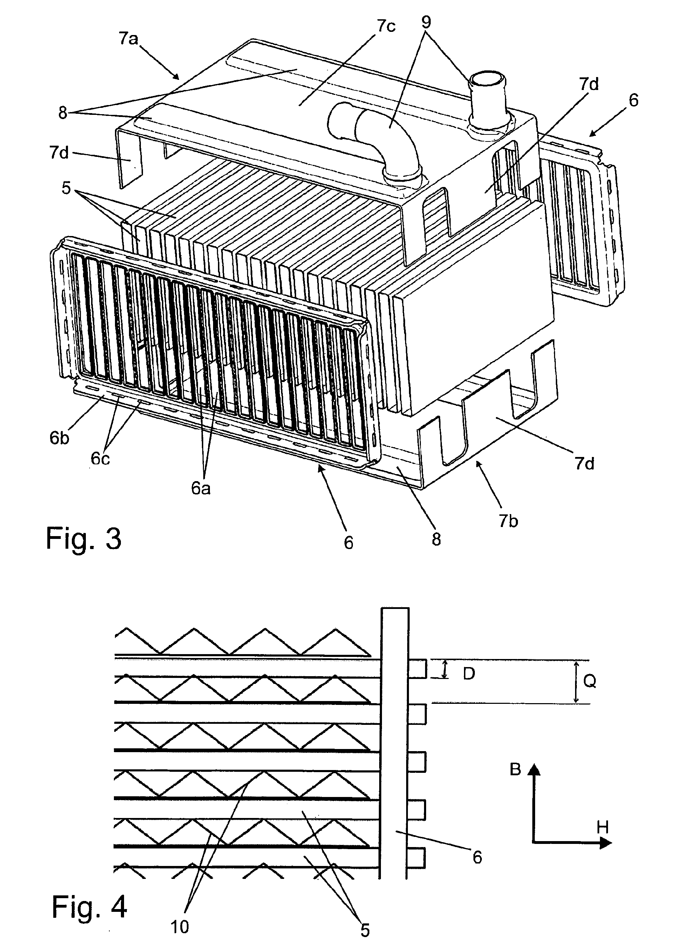

Der Wärmetauscher 3 ist in Fig. 2 sowie in der explodierten Darstellung nach Fig. 3 im Detail dargestellt. Er umfasst eine Mehrzahl von in der Breitenrichtung B gestapelten Tauscherrohren 5, die als Flachrohre ausgebildet sind. Die Breitseiten der Flachrohre erstrecken sich in Hochrichtung H und Tiefenrichtung T. Die Schmalseiten der Flachrohre erstrecken sich in Hochrichtung H und Breitenrichtung B. Nicht dargestellt sind Rippen, die jeweils zwischen den Breitseiten benachbarter Flachrohre 5 angeordnet und mit diesen flächig verlötet sind.

Die Flachrohre 5 sind vorliegend als aus Blechen gefaltete und auf bekannte Weise hergestellte Flachrohre ausgeformt. Sie können alternativ auch als Strangpressprofile ausgebildet sein. Je nach Anforderungen können die Flachrohre 5 Einprägungen nach innen und/oder nach außen aufweisen, um Turbulenzen zu erzeugen und/oder einen definierten Abstand benachbarter Flachrohre bei einer Montage zu gewährleisten. Das Innere der Flachrohre 5 kann alternativ oder zusätzlich zu solchen Ausprägungen mit Rippenblechen versehen sein.

Die Flachrohre 5 münden endseitig in Durchzüge 6a eines Bodens 6. Die Böden 6 sind als Blechformteile aus einem Aluminiumblech hergestellt. Eintrittsseitiger und austrittsseitiger Boden 6 sind vorliegend baugleich, wodurch die Zahl der verschiedenen Bauteile verringert wird.

Der Stapel von Flachrohren 5 wird von einem Wassermantel 7 umfangen, der einen ersten Wassermantelteil 7a und einen zweiten Wassermantelteil 7b aufweist. Der Wassermantel 7 bildet zugleich einen Teil des Gehäuses des erfindungsgemäßen Saugrohrs aus, welches insgesamt von dem Eintrittsabschnitt 1, dem Wassermantel 7 und dem Motorflansch 4 gebildet ist.

Beide Wassermantelteile 7a, 7b haben eine Basis 7c mit zwei endseitigen, abgewinkelten Schenkeln 7d. Die Basis 7c erstreckt sich jeweils entlang der Breitenrichtung B quer zu der Strömungsrichtung der Ladeluft und ist flächig mit den Schmalseiten der Tauscherrohre 5 verlötet. Die Schenkel 7d überdecken jeweils einen Teil einer Breitseite des jeweils äußeren Flachrohrs 5 des Stapels und sind mit dieser Breitseite flächig verlötet.

Die Wassermantelteile 7a, 7b haben im Bereich ihrer Basen 7c jeweils längliche, sich in der Breitenrichtung B erstreckende Ausbuchtungen 8, die die Funktion eines Sammlers für das die Flachrohre 5 umströmende flüssige Kühlmittel ausüben. Zur Zuleitung und Ableitung des Kühlmittels sind an den Ausbuchtungen 8 des einen Wassermantelteils 7a Anschlüsse 9 vorgesehen. Die Ausbuchtungen 8 an dem zweiten Wassermantelteil 7b verbessern die Verteilung des Kühlfluids, das insgesamt im Wesentlichen in der Hochrichtung H entgegengesetzt zu der Strömungsrichtung der Ladeluft an den Breitseiten der Flachrohre 5 entlang strömt, also in Gegenstromrichtung bezüglich der Ladeluft strömt. Bei alternativen Ausführungsformen können die Anschlüsse 9 auch an unterschiedlichen Seiten des Wassermantels vorgesehen sein.

Die Böden 6 werden zusammen mit den Flachrohren 5 und den Wassermantelteilen 7a, 7b mechanisch vormontiert bzw. kassettiert und in einem Lötofen zu einem Wärmetauscherblock verlötet. Hierzu sind geeignete Oberflächen der einzelnen Bauteile mit Lot plattiert.

Zum Anschluss des Eintrittsabschnitts 1 und des Motorflansches 4 haben die Böden 6 um 90° abgewinkelte Ränder 6b, die mit Wellschlitz-Bördelungen 6c versehen sind. Bei der Montage des erfindungsgemäßen Saugrohrs werden korrespondierende Strukturen an den Seiten des Eintrittsabschnitts 1 und des Motorflansches 4 mit den Wellschlitz-Bördelungen 6c formschlüssig verrastet, so dass eine nicht dargestellte Dichtung zwischen Eintrittsflansch 1 und Motorflansch 4 einerseits sowie dem jeweiligen Boden 6 andererseits dichtend angepresst ist.

Bei einer nicht gezeigten, alternativen Ausführungsform erfolgt die mechanische Festlegung mittels einer Verschraubung des Eintrittsflanschs 1 und/oder des Motorflanschs 4 mit dem Boden 6.

Bei Ausbildung des jeweiligen Bauteils 1, 4 aus Metall kann auch eine stoffschlüssige Festlegung mittels Verschweißung oder Verlötung, insbesondere eine Verlötung gemeinsam mit dem Wärmetauscher 3 in einem Lötofen, vorgesehen sein.

Fig. 4 zeigt eine schematische Schnittdarstellung, durch die eine Bemaßung des Durchmessers D der Flachrohre 5 sowie der als Wiederholabstand definierten Querteilung Q veranschaulicht wird. Ein typischer Wert für den Rohrdurchmesser D beträgt etwa 8 mm, wobei eine typische Querteilung Q etwa 10 mm beträgt. Der in Fig. 4 nicht maßstabsgerecht gezeigte flüssigkeitsdurchströmte Zwischenraum zwischen benachbarten Flachrohren 5 hat eine Breite von typisch 2-3 mm. Vorliegend ist dieser Zwischenraum mit Rippen 10 versehen, die eine verbesserte Übertragung der Wärme von den Tauscherrohrwänden auf das Kühlfluid gewährleisten.

Je nach Anforderungen an den Druckabfall können auch in den Flachrohren 5 Rippeneinsätze vorgesehen sein. Eine ladeluftseitige Rippendichte beträgt allgemein für erfindungsgemäße Ausführungsbeispiele bevorzugt zwischen 50 und 100 Rippen pro Dezimeter (Ri/dm). Bei Vorliegen einer Niederdruck-Abgasrückführung beträgt die Rippendichte bevorzugt zwischen 60 und 90 Ri/dm. Bei vorliegen einer Hochdruck-Abgasrückführung beträgt die Rippendichte bevorzugt zwischen 40 und 60 Ri/dm.

Die Maße des Wärmetauschers des gezeigten Ausführungsbeispiels betragen etwa 130 mm Höhe h in der Hochrichtung H, etwa 210 mm Breite b in der Breitenrichtung B und etwa 80 mm Tiefe t in der Tiefenrichtung T.

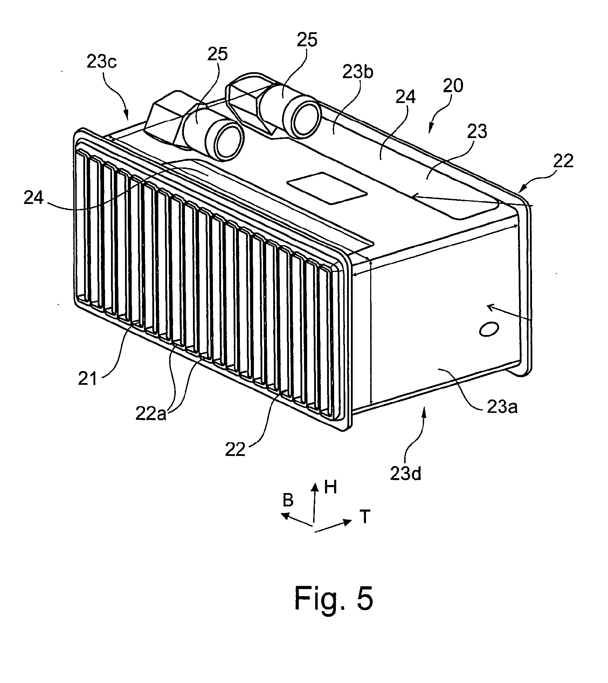

Die Figur 5 zeigt einen Wärmetauscher 20, der dem Wärmetauscher der Figur 2 ähnlich ist. Er umfasst eine Mehrzahl von in der Breitenrichtung B gestapelten Tauscherrohren 21, die vorteilhaft als Flachrohre ausgebildet sind. Die Breitseiten der Flachrohre erstrecken sich in Hochrichtung H und Tiefenrichtung T. Die Schmalseiten der Flachrohre erstrecken sich in Hochrichtung H und Breitenrichtung B. Nicht dargestellt sind Rippen, die jeweils zwischen den Breitseiten benachbarter Flachrohre 21 angeordnet und mit diesen flächig verlötet sind. Bei einem anderen Ausführungsbeispiel kann ggf. auch auf Rippen verzichtet werden. Dabei können die Rohre beispielsweise auf der Außenseite und/oder auf der Innenseite noppen aufweisen zur Erhöhung der Turbulenzen.

Die Flachrohre 21 sind vorliegend als aus Blechen gefaltete und auf bekannte Weise hergestellte Flachrohre ausgeformt. Sie können alternativ auch als Strangpressprofile ausgebildet sein. Je nach Anforderungen können die Flachrohre 21 Einprägungen nach innen und/oder nach außen aufweisen, um Turbulenzen zu erzeugen und/oder einen definierten Abstand benachbarter Flachrohre bei einer Montage zu gewährleisten. Das Innere der Flachrohre 21 kann alternativ oder zusätzlich zu solchen Ausprägungen mit Rippenblechen versehen sein.

Die Flachrohre 21 münden endseitig in Durchzüge 22a eines Bodens 22. Die Böden 22 sind als Blechformteile aus einem Aluminiumblech hergestellt. Eintrittsseitiger und austrittsseitiger Boden 22 sind vorliegend baugleich, wodurch die Zahl der verschiedenen Bauteile verringert wird.

Der Stapel von Flachrohren 21 wird von einem Wassermantel 23 umfangen, der einen ersten Wassermantelteil 23a, einen zweiten Wassermantelteil 23b, einen dritten Wassermantelteil 23c und einen vierten Wassermantelteil 23d aufweist. Der Wassermantel 23 bildet zugleich einen Teil des Gehäuses des erfindungsgemäßen Saugrohrs aus, welches insgesamt von dem Eintrittsabschnitt, dem Wassermantel 23 und dem Motorflansch gebildet ist.

Die vier Wassermantelteile 23a,23b,23c und 23d sind jeweils an einer Seitenfläche des Wassermantels angeordnet und bilden somit einen rechteckigen Kanal, in welchem die Flachrohre verlaufen. Dabei können vorteilhaft zwei sich gegenüberliegende Teile an den Ecken abgewinkelt sein, so dass die beiden verbleibenden Teile an diesen abgewinkelten Bereichen zur Anlage kommen, damit einer verbesserte Verlötung gewährleistet werden kann.

Die Wassermantelteile 23b, 23d haben im Bereich ihrer Basen jeweils längliche, sich in der Breitenrichtung B erstreckende Ausbuchtungen 24, die die Funktion eines Sammlers für das die Flachrohre 21 umströmende flüssige Kühlmittel ausüben. Zur Zuleitung und Ableitung des Kühlmittels sind an den Ausbuchtungen 24 des einen Wassermantelteils 23b Anschlüsse 25 vorgesehen. Die Ausbuchtungen 24 an dem zweiten Wassermantelteil 23d verbessern die Verteilung des Kühlfluids, das insgesamt im Wesentlichen in der Hochrichtung H entgegengesetzt zu der Strömungsrichtung der Ladeluft an den Breitseiten der Flachrohre 21 entlang strömt, also in Gegenstromrichtung bezüglich der Ladeluft strömt. Bei alternativen Ausführungsformen können die Anschlüsse 25 auch an unterschiedlichen Seiten des Wassermantels vorgesehen sein.

Vorteilhaft ist, dass an dem Motorflansch ein Anschlussglied für eine Abgasrückführung ausgebildet ist.

## Patentansprüche

1. Saugrohr für einen Verbrennungsmotor, umfassend
ein äußeres Gehäuse (1, 7, 4) des Saugrohrs, wobei eine Zuleitung (2) für Ladeluft in einen Eintrittsabschnitt (1) des Gehäuses mündet,
einen in das Saugrohr integrierten, von einem Kühlfluid gekühlten Wärmetauscher (3) mit einer Mehrzahl von Tauscherrohren (5), insbesondere Flachrohren, und
einen Motorflansch (4) zum Anschluss des Saugrohrs an einen Zylinderkopf eines Verbrennungsmotors, **dadurch gekennzeichnet, dass** die Tauscherrohre (5) von der Ladeluft durchströmt werden, und dass zumindest ein Teil des äußeren Gehäuses als Hülle eines Tauscherrohre (5) umgebenden Wassermantels (7) ausgebildet ist und, dass die Tauscherrohre (5) endseitig jeweils in Böden (6) des Wärmetauschers (3) münden.

2. Saugrohr nach einem der vorhergehenden Ansprüche, **dadurch gekennzeichnet, dass** die Hülle des Wassermantels (7) abschnittsweise flächig mit den Tauscherrohren (5) verlötet ist.

3. Saugrohr nach einem der vorhergehenden Ansprüche, **dadurch gekennzeichnet, dass** ein kühlfluidseitiger Sammler als sich über mehrere der Tauscherrohre (5) erstreckende Ausbuchtung (8) der Hülle des Wassermantels (7) ausgebildet ist, wobei insbesondere ein Kühlfluid-Anschluss (9) an der Ausbuchtung (8) vorgesehen ist.

4. Saugrohr nach einem der vorhergehenden Ansprüche, **dadurch gekennzeichnet, dass** die Hülle des Wassermantels (7) zumindest zwei oder auch vier Blechformteile (7a, 7b) umfasst.

5. Saugrohr nach Anspruch 4, **dadurch gekennzeichnet, dass** zumindest eines der Blechformteile (7a, 7b) eine entlang einer Stapelrichtung (B) der Tauscherrohre (5) verlaufenden Basis (7c) und zwei dazu senkrecht verlaufenden Schenkeln (7d) aufweist, wobei die Schenkel (7d) jeweils mit einer Breitseite eines äußeren Tauscherrohrs (5) verlötet sind.

6. Saugrohr nach einem der vorhergehenden Ansprüche, **dadurch gekennzeichnet, dass** zumindest eines von Eintrittsabschnitt (1) oder Motorflansch (4) mittels formschlüssiger mechanischer Festlegung, insbesondere Wellschlitz-Bördelung und/oder Verschraubung, an dem Wärmetauscher (3) festgelegt ist.

7. Saugrohr nach einem der vorhergehenden Ansprüche, **dadurch gekennzeichnet, dass** zumindest eines von Eintrittsabschnitt (1) oder Motorflansch (4) stoffschlüssig mit dem Wärmetauscher (3) verbunden ist, insbesondere mittels Verschweißung und/oder Verlötu ng.

8. Saugrohr nach einem der vorhergehenden Ansprüche, **dadurch gekennzeichnet, dass** zumindest eines von Eintrittsflansch (1) oder Motorflansch (4) aus Kunststoff besteht.

9. Saugrohr nach einem der vorhergehenden Ansprüche, **dadurch gekennzeichnet, dass** zumindest eines von Eintrittsflansch (1) oder Motorflansch (4) aus Metall, insbesondere Aluminium, besteht.

10. Saugrohr nach einem der vorhergehenden Ansprüche, **dadurch gekennzeichnet, dass** das Verhältnis zwischen einer quer zu einer Luftströmungsrichtung gemessenen Breite (b) des Wärmetauschers (3) und einem Zylinderabstand des Verbrennungsmotors zwischen 2,1 und 3,3 beträgt, insbesondere in Kombination mit einem Vierzylinder-Reihenmotor.

11. Saugrohr nach einem der vorhergehenden Ansprüche, **dadurch gekennzeichnet, dass** das Verhältnis zwischen einer quer zu einer Luftströmungsrichtung gemessenen Tiefe (t) des Wärmetauschers und einem Zylinderbohrungsdurchmesser des Verbrennungsmotors zwischen 0,95 und 1,4 beträgt.

12. Saugrohr nach einem der vorhergehenden Ansprüche, **dadurch gekennzeichnet, dass** das Verhältnis zwischen einer in Luftströmungsrichtung gemessenen Höhe (h) des Wärmetauschers und dem Produkt aus Verdichtungsverhältnis und Kolbenhub des Verbrennungsmotors zwischen 0,065 und 0,095 beträgt.

13. Saugrohr nach einem der vorhergehenden Ansprüche, **dadurch gekennzeichnet, dass** das Kühlfluid die Tauscherrohre (5) überwiegend in Gegenstromrichtung bezüglich der Ladeluft umströmt.

14. Saugrohr nach einem der vorhergehenden Ansprüche, **dadurch gekennzeichnet, dass** die als Flachrohre ausgebildeten Tauscherrohre (5) einen Durchmesser (D) von etwa 6 mm bis etwa 10 mm aufweisen, wobei insbesondere eine Querteilung (Q) zwischen 8 mm und 12 mm beträgt.

15. Saugrohr nach einem der vorhergehenden Ansprüche, **dadurch gekennzeichnet, dass** an dem Motorflansch ein Anschlussglied (4c) für eine Abgasrückführung ausgebildet ist.

## Claims

1. An intake pipe for an internal combustion engine, comprising an outer housing (1, 7, 4) of the intake pipe, wherein a feed line (2) for charge air opens into an inlet section (1) of the housing, a heat exchanger (3) integrated into the intake pipe and cooled by a cooling fluid and having a plurality of exchanger tubes (5), particularly flat tubes, and an engine flange (4) for connecting the intake pipe to a cylinder head of an internal combustion engine, **characterized in that** the charge air flows through the exchanger tubes (5), and that at least one part of the outer housing is designed as a water jacket (7) surrounding the exchanger tubes (5), and that the exchanger tubes (5) lead at the ends each into the bottoms (6) of the heat exchanger (3).

2. The intake pipe according to any one of the preceding claims, **characterized in that** the water jacket (7) is soldered in areas in a planar fashion to the exchanger tubes (5).

3. The intake pipe according to any one of the preceding claims, **characterized in that** a cooling fluid-side header is formed as a bulge (8), extending over a number of exchanger tubes (5) of the water jacket (7), wherein particularly a cooling fluid connection (9) is provided at the bulge (8).

4. The intake pipe according to any one of the preceding claims, **characterized in that** the water jacket (7) comprises at least two or also four sheet metal parts (7a, 7b).

5. The intake pipe according to claim 4, **characterized in that** at least one of the sheet metal parts (7a, 7b) has a base (7c), running along a stack direction (B) of the exchanger tubes (5), and two legs (7d) perpendicular thereto, wherein the legs (7d) are each soldered to a broad side of an outer exchanger tube (5).

6. The intake pipe according to any one of the preceding claims, **characterized in that** at least one, either inlet section (1) or engine flange (4), is fastened to the heat exchanger (3) by means of a form-fitting mechanical connection, particularly corrugated slot crimping and/or a screw connection.

7. The intake pipe according to any one of the preceding claims, **characterized in that** at least one, either inlet section (1) or engine flange (4), is connected by material bonding to the heat exchanger (3), particularly by means of welding and/or soldering.

8. The intake pipe according to any one of the preceding claims, **characterized in that** at least one, either inlet flange (1) or engine flange (4), consists of plastic.

9. The intake pipe according to any one of the preceding claims, **characterized in that** at least one, either inlet flange (1) or engine flange (4), consists of metal, particularly aluminum.

10. The intake pipe according to any one of the preceding claims, **characterized in that** the ratio between a width (b), measured transverse to an airflow direction, of the heat exchanger (3) and a cylinder distance of the internal combustion engine is between 2.1 and 3.3, particularly in combination with a four cylinder inline engine.

11. The intake pipe according to any one of the preceding claims, **characterized in that** the ratio between a depth (t), measured transverse to the airflow direction, of the heat exchanger and a cylinder bore diameter of the internal combustion engine is between 0.95 and 1.4.

12. The intake pipe according to any one of the preceding claims, **characterized in that** the ratio between a height (h), measured in the airflow direction, of the heat exchanger and the product of the compression ratio and piston stroke of the internal combustion engine is between 0.065 and 0.095.

13. The intake pipe according to any one of the preceding claims, **characterized in that** the cooling fluid flows around the exchanger tubes (5) predominantly in the counterflow direction relative to the charge air.

14. The intake pipe according to any one of the preceding claims, **characterized in that** the exchanger tubes (5), formed as flat tubes, have a diameter (D) of about 6 mm to about 10 mm, wherein particularly a transverse pitch (Q) is between 8 mm and 12 mm.

15. The intake pipe according to any one of the preceding claims, **characterized in that** a connecting member (4c) for exhaust gas recirculation is formed at the engine flange.

## Revendications

1. Collecteur d'admission pour un moteur à combustion interne, comprenant un carter extérieur (1, 7, 4) du collecteur d'admission, où une conduite d'alimentation (2), pour de l'air de suralimentation, débouche dans une partie d'entrée (1) du carter, un échangeur de chaleur (3) intégré dans le collecteur d'admission et refroidi par un fluide de refroidissement, ledit échangeur de chaleur comportant une pluralité de tubes d'échangeur (5), en particulier des tubes plats, et une bride de moteur (4) servant au raccordement du collecteur d'admission à une culasse de cylindre d'un moteur à combustion interne, **caractérisé en ce que** les tubes d'échangeur (5) sont traversés par de l'air de suralimentation, et **en ce qu'**au moins une partie du carter extérieur est conçue comme une enveloppe d'une chemise d'eau (7) entourant des tubes d'échangeur (5), et **en ce que** les tubes d'échangeur (5) débouchent à chaque fois, côté extrémité, dans des fonds (6) de l'échangeur de chaleur (3).

2. Collecteur d'admission selon l'une ou l'autre des revendications précédentes, **caractérisé en ce que** l'enveloppe de la chemise d'eau (7) est assemblée par brasage avec les tubes d'échangeur (5), en partie sur toute la surface.

3. Collecteur d'admission selon l'une ou l'autre des revendications précédentes, **caractérisé en ce qu'**un collecteur, côté fluide de refroidissement, est configuré comme une partie saillante (8) de l'enveloppe de la chemise d'eau (7), ladite partie saillante s'étendant sur plusieurs des tubes d'échangeur (5), où il est prévu en particulier un raccordement (9) en fluide de refroidissement, sur la partie saillante (8).

4. Collecteur d'admission selon l'une quelconque des revendications précédentes, **caractérisé en ce que** l'enveloppe de la chemise d'eau (7) comprend au moins deux ou même aussi quatre pièces de forme en tôle (7a, 7b).

5. Collecteur d'admission selon la revendication 4, **caractérisé en ce qu'**au moins l'une des pièces de forme en tôle (7a, 7b) présente une base (7c) s'étendant le long d'une direction d'empilage (B) des tubes d'échangeur (5), et deux branches (7d) s'étendant perpendiculairement à ladite base, où les branches (7d) sont assemblées à chaque fois, par brasage, avec un grand côté d'un tube d'échangeur extérieur (5).

6. Collecteur d'admission selon l'une quelconque des revendications précédentes, **caractérisé en ce qu'**au moins l'une ou l'autre de la partie d'entrée (1) et de la bride (4) du moteur est fixée sur l'échangeur de chaleur (3), au moyen d'une fixation mécanique réalisée par complémentarité de forme, en particulier grâce à un bord rabattu comportant des fentes à ondulation et / ou au moyen d'un assemblage vissé.

7. Collecteur d'admission selon l'une quelconque des revendications précédentes, **caractérisé en ce qu'**au moins l'une ou l'autre de la partie d'entrée (1) et de la bride (4) du moteur est assemblée avec l'échangeur de chaleur (3), par continuité de matière, en particulier au moyen d'un assemblage par soudage et / ou par brasage.

8. Collecteur d'admission selon l'une quelconque des revendications précédentes, **caractérisé en ce qu'**au moins l'une ou l'autre de la bride d'entrée (1) et de la bride (4) du moteur est en matière plastique.

9. Collecteur d'admission selon l'une quelconque des revendications précédentes, **caractérisé en ce qu'**au moins l'une ou l'autre de la bride d'entrée (1) et de la bride (4) du moteur est en métal, en particulier en aluminium.

10. Collecteur d'admission selon l'une quelconque des revendications précédentes, **caractérisé en ce que** le rapport entre une largeur (b) de l'échangeur de chaleur (3), mesurée de façon transversale par rapport à une direction de l'écoulement d'air, et un écartement entre les cylindres du moteur à combustion interne, est compris entre 2,1 et 3,3, en particulier dans une configuration combinée avec un moteur à quatre cylindres en ligne.

11. Collecteur d'admission selon l'une quelconque des revendications précédentes, **caractérisé en ce que** le rapport entre une profondeur (t) de l'échangeur de chaleur, mesurée de façon transversale par rapport à une direction de l'écoulement d'air, et un diamètre d'alésage des cylindres du moteur à combustion interne, est compris entre 0,95 et 1,4.

12. Collecteur d'admission selon l'une quelconque des revendications précédentes, **caractérisé en ce que** le rapport entre une hauteur (h) de l'échangeur de chaleur, mesurée dans une direction de l'écoulement d'air, et le produit résultant du taux de compression et de la course des pistons du moteur à combustion interne, est compris entre 0,065 et 0,095.

13. Collecteur d'admission selon l'une quelconque des revendications précédentes, **caractérisé en ce que** le fluide de refroidissement s'écoule autour des tubes d'échangeur (5), essentiellement dans une direction de flux opposé par rapport à celle de l'air de suralimentation.

14. Collecteur d'admission selon l'une quelconque des revendications précédentes, **caractérisé en ce que** les tubes d'échangeur (5) configurés comme des tubes plats présentent un diamètre (D) compris à peu près entre 6 mm et à peu près 10 mm, où en particulier une séparation transversale (Q) est comprise entre 8 mm et 12 mm.

15. Collecteur d'admission selon l'une quelconque des revendications précédentes, **caractérisé en ce qu'**un élément de raccordement (4c) prévu pour un recyclage des gaz d'échappement est configuré sur la bride du moteur.
